# EUROPÄISCHE PATENTSCHRIFT

(11) **EP 1 251 646 B1**
(45) Veröffentlichungstag und Bekanntmachung des Hinweises auf die Patenterteilung: **16.03.2005**
(21) Anmeldenummer: 02100323.1
(22) Anmeldetag: 02.04.2002
(51) Int. Cl.: H04B 3/58

(54) **Verfahren zur Halbduplexübertragung von Informationen zwischen Kommunikationseinrichtungen mit Repeatern**
Method for halfduplex transmission of informations between communication devices with repeaters
Méthode pour la transmission semi-duplex d' informations entre appareils de communication avec répéteurs

(30) Priorität: 04.04.2001 DE 10116838
(43) Veröffentlichungstag der Anmeldung: 23.10.2002
(73) Patentinhaber: SIEMENS AKTIENGESELLSCHAFT, 80333 München (DE)
(72) Erfinder: Knobloch, Thomas, 80939 München (DE); Ruhnke, Helko, 81479 München (DE); Siebert, Harry, 82178 Puchheim (DE)

(56) Entgegenhaltungen:
- EP-A- 0 208 021
- EP-A- 0 852 419
- DE-A- 4 326 749
- DE-A- 19 818 325
- US-A- 5 606 555

## Beschreibung

Bei Powerline Communication (PLC) Netzen, Breitbandkabelnetzen oder Funknetzen sind alle an der Kommunikation beteiligten Kommunikationseinrichtungen und Repeater über ein gemeinsames Übertragungsmedium, d.h. eine Energieversorgungsleitung, HF-Leitung oder eine Funkstrecke miteinander verbunden.

Für die Verbindung mehrerer Kommunikationseinrichtungen über ein gemeinsames Übertragungsmedium gibt es zwei Klassen von Übertragungsverfahren: halbduplexfähige Übertragungsverfahren und vollduplexfähige Übertragungsverfahren. Für PLC Netze wird üblicherweise ein Halbduplexverfahren verwendet. Zu den Halbduplexverfahren gehört das TDMA-Verfahren (Time Division Multiple Access, Zeitmultiplexverfahren), bei dem Downlink-Informationen und Uplink-Informationen zeitlich versetzt übertragen werden. Downlink bedeutet dabei Informationsübertragung von der zentralen Kommunikationseinrichtung zu einer oder mehreren dezentralen Kommunikationseinrichtungen, Uplink bedeutet Informationsübertragung von einer dezentralen Kommunikationseinrichtung zur zentralen Kommunikationseinrichtung.

Bei den TDMA-Verfahren besteht ein Problem darin, die Zeitabläufe netzwerkweit so zu koordinieren, daß die Downlink-Übertragung die Uplink-Übertragung aufgrund auftretender Laufzeiteffekte nicht beeinflußt und umgekehrt.

Eine bekannte Lösung dieses Problems besteht darin, daß ein festes Zeitschema vorgegeben wird, wobei von konstanten Entfernungen der im Netz vorhandenen Einrichtungen voneinander ausgegangen wird. Falls die Voraussetzung konstanter Entfernungen wie z.B. in heutigen Mobilfunknetzen aufgrund beweglicher Einrichtungen nicht eingehalten werden kann, werden entsprechende Pufferzeiten vorgesehen, die die für Informationsübertragungszwecke zur Verfügung stehende Übertragungskapazität verringern.

Bei bisherigen Lösungen treten folgende Probleme auf:
- entweder sind feste Entfernungen der im Netz vorhandenen Einrichtungen vorzusehen; dadurch können insbesondere räumliche Erweiterungen des Netzes, die mindestens einen weiteren Repeater hinter dem am weitesten von der zentralen Kommunikationseinrichtung entfernten Repeater erfordern, nur durch eine komplette Rekonfiguration des Netzwerkes erreicht werden;
- oder für die maximal geplante Erweiterbarkeit müssen bereits in der Aufbauphase Übertragungsressourcen für die Kompensation der zu erwartenden maximalen Signallaufzeit bei Endausbau reserviert werden, wobei bei notwendigen Erweiterungen nach Erreichen des maximal geplanten Endausbaus wieder eine komplette Rekonfiguration erforderlich wird.

Bisherige Lösungsansätze sind nur im Rahmen eines vorgesehenen Endausbaus flexibel, wobei die Flexibilität eine verringerte Ausnutzung der zur Verfügung stehenden Übertragungsressourcen in jeder geringeren als der Endausbaustufe bedeutet.

US 5,606,555 offenbart ferner ein repeaterfreies System, bei dem entfernte Einheiten in Entfernungszonen eingeteilt werden und bei dem die entfernten Einheiten mit Ausnahme der am weitesten von einer Zentralstation entfernten Einheiten eine zusätzliche Verzögerung aufweisen, so daß der Sendezyklus der entfernten Einheiten vor dem Empfangszyklus beginnt. Ein System dieser Art erfordert eine Rekonfiguration, wenn eine neue entfernte Einheit angeschlossen wird, deren Entfernung zur Zentralstation größer als die bislang größte Entfernung zur Zentralstation ist.

DE 198 18 325 offenbart ein Funk-Kommunikationssystem, bei dem über die Verbindung zwischen einer Basisstationssteuerung und einer Basisstation ein Signal übertragen wird, das zurück zum jeweiligen Sender gespiegelt wird, um eine Signallaufzeit zu bestimmen und eine Synchronisation der Basisstation bezüglich der Funkverbindung durchzuführen.

Die der vorliegenden Erfindung zugrundeliegende Aufgabe besteht darin, die Effizienz der bisher bekannten Verfahren zur Halbduplexübertragung von Informationen zwischen Kommunikationseinrichtungen mit Repeatern zu verbessern.

Die Aufgabe wird ausgehend von den Verfahren zur Halbduplexübertragung von Informationen zwischen Kommunikationseinrichtungen mit Repeatern gemäß den Merkmalen des Oberbegriffs des Patentanspruchs 1 durch dessen kennzeichnende Merkmale gelöst.

Der wesentliche Aspekt des erfindungsgemäßen Verfahrens ist die Aufteilung von Übertragungsressourcen für Informationsübertragung oder zur Kompensation der Signallaufzeiten in Abhängigkeit von den aktuellen Erfordernissen, die sich im wesentlichen aus der räumlichen Ausdehnung eines Kommunikationsnetzes ergeben. Durch das erfindungsgemäße Verfahren wird sichergestellt, daß ein Kommunikationsnetz, in welchem zur Informationsübermittlung ein Halbduplexverfahren eingesetzt wird, gleichzeitig flexibel für Erweiterungen ist und für jede Netzausbaustufe die optimale Nutzung der vorhandenen Übertragungskapazität gewährleistet.

Nach einer Ausgestaltung des erfindungsgemäßen Verfahrens können spezifische Parameter für die dezentralen Kommunikationseinrichtungen einschließlich aller für die Übertragung eingesetzten Repeatereinrichtungen in der zentralen Kommunikationseinrichtung gespeichert sein und von dieser an die dezentralen Kommunikationseinrichtungen bzw. die Repeatereinrichtungen übermittelt und dort gespeichert werden - Anspruch 2. Von Vorteil ist dabei, daß alle Bedienereingaben, die nach der physikalischen Installation einer neuen Einrichtung für deren Einbindung in das Kommunikationsnetzwerk erforderlich sind, zentral durchgeführt werden können.

Vorteilhaft können die spezifischen Parameter nach Übertragung an die dezentralen Kommunikationseinrichtungen bzw. an die Repeatereinrichtungen in der zentralen Kommunikationseinrichtung zumindest teilweise gelöscht werden - Anspruch 4. Die freiwerdenden Ressourcen können für andere Zwecke eingesetzt werden.

Die spezifischen Parameter werden mittels eines von der zentralen Kommunikationseinrichtung gesteuerten Meßverfahrens in vorgegebenen Zeitabständen und/oder bei jeder Konfigurationsänderung gemessen - Anspruch 5. Dies hat den Vorteil, daß einerseits bei festgestellten, beabsichtigten Konfigurationsänderungen die Parameter angepaßt werden können, um die Einbindung einer neuen Einrichtung zu ermöglichen bzw. bei Entfernung einer Einrichtung den nunmehr optimalen Parametersatz zu ermitteln. Andererseits können durch regelmäßige Messungen unbeabsichtigte Konfigurationsänderungen oder sich anderweitig verändernde physikalische Größen festgestellt werden.

Vorteilhaft ist für die Übertragung der Daten eine Rahmenstruktur mit einer vorgegebenen, konstanten Rahmenlänge vorgesehe. Innerhalb dieses Rahmens wird eine Anzahl von Zeitschlitzen vorgesehen, wobei der Informationsübermittlungsrichtung von der zentralen Kommunikationseinrichtung zu einer oder mehreren dezentralen Kommunikationseinrichtungen ein erster Block von Zeitschlitzen zugeordnet ist, der Informationsübermittlungsrichtung von einer oder mehreren dezentralen Kommunikationseinrichtungen zur zentralen Kommunikationseinrichtung ein zweiter Block von Zeitschlitzen zugeordnet ist sowie eine erste Anzahl von Zeiteinheiten zwischen dem ersten und dem zweiten Block sowie eine zweite Anzahl von Zeiteinheiten zwischen dem zweiten Block und dem Rahmenende für die Kompensation der Signallaufzeiten vorgesehen ist, wobei eine Zeiteinheit durch jeweils zumindest einen Teil eines Zeitschlitzes repräsentiert ist - Anspruch 6. Eine Anpassung der Rahmenstruktur an aktuelle Gegebenheiten erfolgt durch eine dynamische Anpassung der Blockgrößen für Downlink und Uplink; dabei werden Zeitschlitze aus diesen Blöcken in Zeiteinheiten umgewidmet und für die Kompensation von Signallaufzeiten bereitgestellt, falls Repeaterebenen hinzukommen bzw. das Kompensations-Kontingent wird verkleinert und die freiwerdenden Zeiteinheiten gruppiert in Zeitschlitze werden den Uplink/Downlink-Blöcken zugewiesen, falls Repeaterebenen entfernt werden. Die Rahmen haben unabhängig von der aktuellen Gestaltung des Netzwerks stets die gleiche zeitliche Länge. Dadurch haben die Rahmenstartzeitpunkte einen stets konstanten zeitlichen Abstand.

Weitere vorteilhafte Ausgestaltungen der Erfindungen sind den Unteransprüchen zu entnehmen.

Im folgenden wird das erfindungsgemäße Verfahren anhand von 4 Zeichnungen näher erläutert. Dabei zeigen:
- Figur 1a: eine schematische Darstellung eines hierarchisch aufgebauten Netzwerkes mit vier Repeaterebenen RE₀..RE₃, bestehend aus einer zentralen Kommunikationseinrichtung M, Repeatern R₁₁, R₁₂, R₂₁ und dezentralen Kommunikationseinrichtungen S₁₃, S₂₂, S₃₁, S₃₂,
- Figur 1b: eine schematische Darstellung des zeitlichen Ablaufs der Kommunikation über die vier Repeaterebenen RE₀..RE₃ der Figur 1a,
- Figur 2: eine schematische Darstellung der veränderten Zeitabläufe bei Hinzufügen einer Repeaterebene RE₄ zu dem in Figur 1a dargestellten Netzwerk und
- Figur 3: eine schematische Darstellung der veränderten Zeitabläufe bei Entfernen einer Repeaterebene RE₃ aus dem in Figur 1a dargestellten Netzwerk.

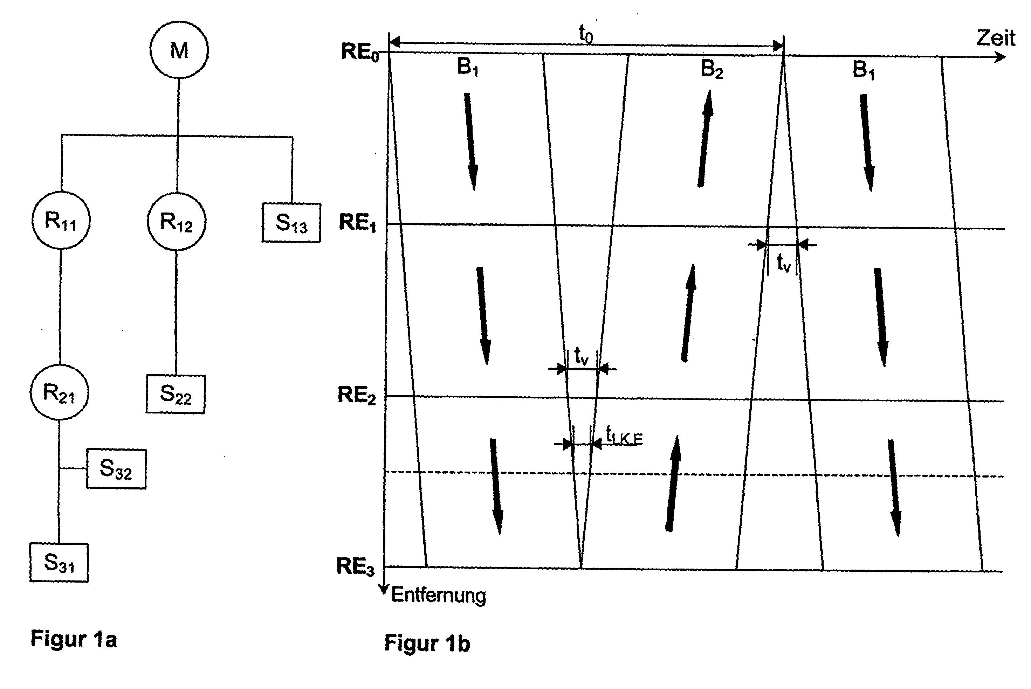

Für das Ausführungsbeispiel werden zunächst drei Repeaterebenen RE₁..RE₃ und die zentrale Repeaterebene RE₀ eingeführt, wobei eine i-te Repeaterebene REᵢ alle Einrichtungen - also Repeater R und dezentrale Kommunikationseinrichtungen S - umfaßt, auf deren Weg der Informationsübermittlung zur zentralen Kommunikationseinrichtung M die gleiche Anzahl i-1 von Repeatern R liegt. Dabei wird festgelegt:
- Die zentrale Kommunikationseinrichtung M bildet eine eigene zentrale Repeaterebene RE₀.
- Die erste Repeaterebene RE₁ besteht aus allen Einrichtungen, auf deren Weg der Informationsübermittlung zur zentralen Kommunikationseinrichtung M kein Repeater R liegt; beispielsweise umfaßt RE₁ zwei Repeater R₁₁, R₁₂ und eine dezentrale Kommunikationseinrichtung S₁₃ - siehe Figur 1a.
- Die zweite Repeaterebene RE₂ besteht aus allen Einrichtungen, auf deren Weg der Informationsübermittlung zur zentralen Kommunikationseinrichtung M ein beliebiger Repeater R₁ₖ der ersten Repeaterebene RE₁ liegt; beispielsweise umfaßt RE₂ einen Repeater R₂₁ und eine dezentrale Kommunikationseinrichtung S₂₂ - siehe Figur 1a.
- Die dritte Repeaterebene RE₃ besteht aus allen Einrichtungen, auf deren Weg der Informationsübermittlung zur zentralen Kommunikationseinrichtung M ein beliebiger Repeater R₁ₖ, der ersten Repeaterebene RE₁ und ein beliebiger Repeater R₂ₖ, der zweiten Repeaterebene RE₂ liegt; beispielsweise umfaßt RE₂ zwei dezentrale Kommunikationseinrichtungen S₃₁, S₃₂ - siehe Figur 1a.
- Allgemein gilt für eine Anzahl n von Repeaterebenen: die n-te Repeaterebene REₙ, die von der zentralen Kommunikationseinrichtung die größte Übertragungsmedium-Entfernung hat, besteht aus den Einrichtungen, auf deren Weg der Informationsübermittlung zur zentralen Kommunikationseinrichtung M je ein Repeater der ersten bis (n-1)-ten Repeaterebene RE₁..REₙ₋₁ liegt.

Für die Informationsübermittlung ist eine netzweit einheitliche Rahmenstruktur fester Länge vorgesehen. In jedem Rahmen ist ein erster Block B₁ von Zeitschlitzen für die Übertragung der Downlink-Informationen vorgesehen, ein zweiter Block B₂ von Zeitschlitzen wird für die Übertragung der Uplink-Informationen bereitgestellt. Für die Kompensation der Signallaufzeiten werden Zeiteinheiten verwendet, deren Zahl an die aktuelle räumliche Ausdehnung des Netzwerkes angepaßt ist, wobei eine Zeiteinheit durch jeweils zumindest einen Teil eines Zeitschlitzes repräsentiert ist. In den Figuren 1..3 sind nicht die einzelnen Zeitschlitze, sondern jeweils nur die Blöcke B₁, B₂ dargestellt. Aufgrund der festen Rahmenlänge ergibt sich ein fester zeitlicher Abstand t₀ der Rahmenstartzeitpunkte.

Jeder Repeaterebene REᵢ wird eine Verzögerungszeit zugeordnet. Diese Verzögerungszeit ergibt sich aus der Laufzeit eines Signals zur untergeordneten Repeaterebene REᵢ₋₁. Dabei wird eine Standardentfernung zwischen zwei Repeaterebenen REᵢ, REᵢ₋₁ definiert, die aus der maximalen Übertragungsreichweite der Einrichtungen ermittelt wird. Unter der vereinfachenden Annahme, daß alle Einrichtungen den Standardabstand zu ihrem zugeordneten Repeater R aufweisen, kann allen Repeaterebenen REᵢ die gleiche Verzögerungszeit tᵥ zugeordnet werden. Figur 1b stellt diese Situation für die Repeaterebenen RE₀..RE₃ dar, die Anzahl n der Repeaterebenen ist n=3. Erfindungsgemäß wird festgelegt:
- Die Übertragung der Daten des Uplink-Blocks B₂ einer Einrichtung der n-ten Repeaterebene REₙ - in Figur 1 RE₃ - darf ohne Verzögerung beginnen, nachdem alle Daten des Downlink-Blocks B₁ empfangen wurden.
- Die Übertragung der Daten des Uplink-Blocks B₂ durch eine Einrichtung der (n-1)-ten Repeaterebene REₙ₋₁ - in Figur 1 RE₂ - darf erst nach einer Verzögerungszeit tᵥ nach Empfang aller Daten des Downlink-Blocks B₁ beginnen.
- Die Übertragung der Daten des Uplink-Blocks B₂ durch eine Einrichtung der (n-2)-ten Repeaterebene REₙ₋₂ - in Figur 1 RE₁ - darf erst nach einer zweifachen Verzögerungszeit 2tᵥ nach Empfang aller Daten des Downlink-Blocks B₁ beginnen.
- Allgemein darf bei n Repeaterebenen die Übertragung der Daten des Uplink-Blocks B₂ durch eine Einrichtung der i-ten Repeaterebene REi erst nach einer (n-i)-fachen Verzögerungszeit (n-i)*tᵥ nach Empfang aller Daten des Downlink-Blocks B₁ beginnen.
- Die Übertragung der Daten des Downlink-Blocks B₁ des folgenden Rahmens darf durch eine Einrichtung der zentralen Repeaterebene RE₀ - die zentrale Kommunikationseinrichtung M - sofort nach Beendigung der Übertragung des Uplink-Blocks B₂ des aktuellen Rahmens beginnen.
- Die Übertragung der Daten des Downlink-Blocks B₁ des folgenden Rahmens darf durch eine Repeatereinrichtung der ersten Repeaterebene RE₁ - in Figur 1 Repeater R₁₁, R₁₂ - erst nach einer Verzögerungszeit tᵥ nach Beendigung der Übertragung des Uplink-Blocks B₂ des aktuellen Rahmens beginnen.
- Die Übertragung der Daten des Downlink-Blocks B₁ des folgenden Rahmens darf durch eine Repeatereinrichtung der zweiten Repeaterebene RE₂ - in Figur 1 Repeater R₂₁ - erst nach einer Verzögerungszeit tᵥ nach Beendigung der Übertragung des Uplink-Blocks B₂ des aktuellen Rahmens beginnen.
- Allgemein darf die Übertragung der Daten des Downlink-Blocks B₁ des folgenden Rahmens durch einen Repeater R der i-ten Repeaterebene REᵢ erst nach einer i-fachen Verzögerungszeit i*tᵥ nach Ende der Übertragung des Uplink-Blocks B₂ des aktuellen Rahmens beginnen.

Kann aufgrund der Ausgestaltung des Netzwerkes die vereinfachende Annahme des gleichen Abstandes aller Einrichtungen zu ihrem zugeordneten Repeater R nicht eingehalten werden, ändern sich die oben genannten Beziehungen dahingehend, daß eine Einrichtungs-spezifische Laufzeitkorrektur t_{LK,E} für jede Einrichtung eingeführt wird, welche nicht den Standardabstand zur übergeordneten Repeaterebene RE aufweist. Diese Einrichtungs-spezifische Laufzeitkorrektur t_{LK,E} läßt sich aus der Differenz von der für den Standardabstand geltenden Verzögerungszeit tᵥ und der tatsächlichen Laufzeit zur übergeordneten Repeaterebene RE ermitteln. Dies wird ebenfalls in Figur 1b veranschaulicht, dabei ist die dezentrale Kommunikationseinrichtung S₃₂ in geringerem Abstand zu Repeater R₂₁ angeordnet - gestrichelte Linie. Die Einrichtung S₃₂ darf nun nicht sofort, sondern erst nach Ablauf der Laufzeitkorrektur t_{LK,32} nach Ende der Downlink-Übertragung mit der Uplink-Übertragung beginnen. Grundsätzlich sind individuelle Einrichtungs-spezifische Laufzeitkorrekturen für alle Einrichtungen, ggf. auch für Repeater R, einer Repeaterebene RE erforderlich, deren Laufzeit kleiner als die für den Standardabstand geltende Verzögerungszeit tᵥ ist. Vorteilhaft ist, dass die Laufzeitkorrektur eine lokale Größe ist, die nur innerhalb der jeweiligen Repeaterebene bestimmt und beachtet werden muß. Insbesondere können sich dadurch keine Meßfehler über mehrere Ebenen akkumulieren.

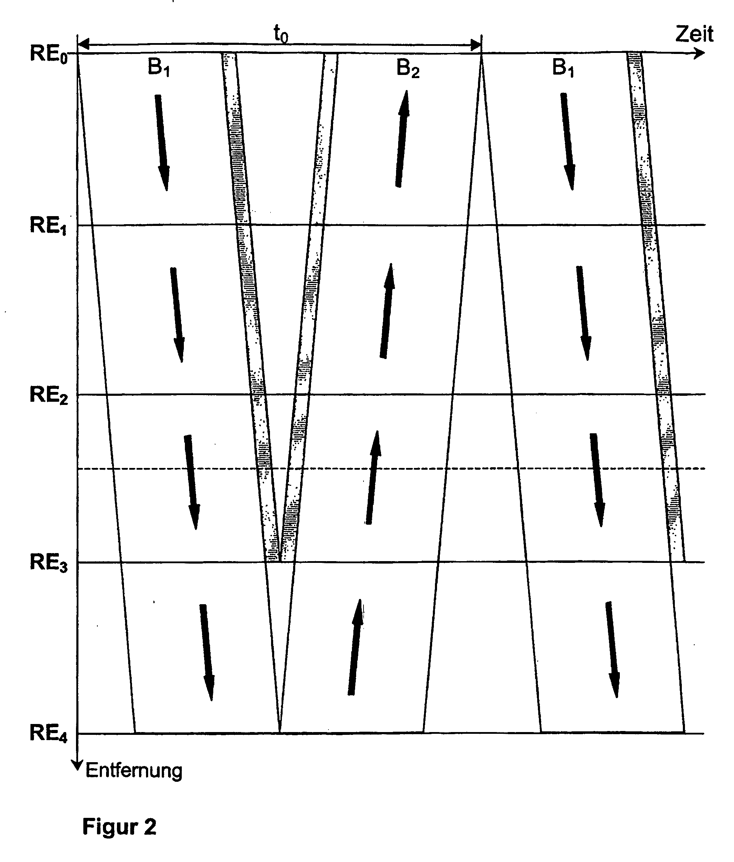

Figur 2 zeigt die Veränderungen bei Hinzufügen einer vierten Repeaterebene RE₄ zu dem in Figur 1a dargestellten Netzwerk. Der Abstand der Rahmenstartzeitpunkte t₀ bleibt dabei konstant. Die veränderten Laufzeitbedingungen, hervorgerufen durch die größere räumliche Ausdehnung des Netzwerkes, werden durch Verringerung der Anzahl der für die Übertragung verwendeten Zeitschlitze - schraffiert dargestellt - berücksichtigt, wobei nur soviel Übertragungskapazität bereitgestellt wird, wie für die Einhaltung der Bedingung, daß eine Einrichtung der vierten Repeaterebene RE₄ Uplink-Informationen erst nach vollständigem Empfang der Downlink-Informationen senden darf, benötigt werden.

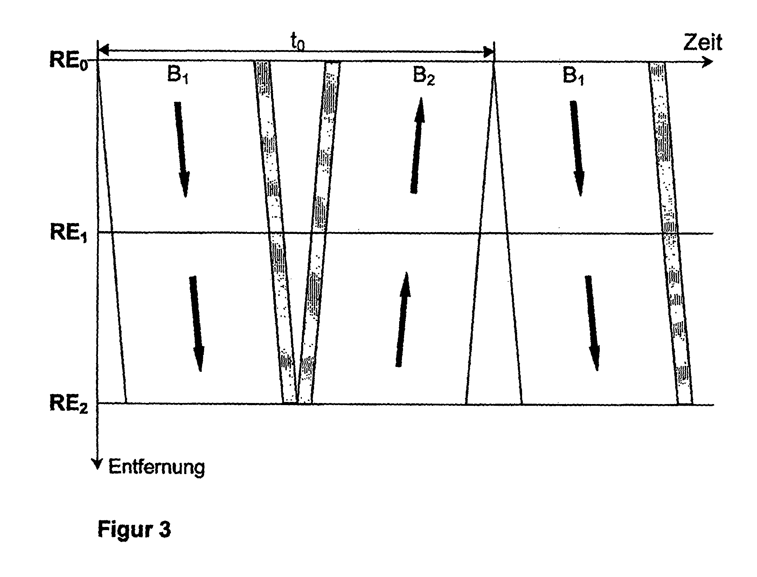

Figur 3 zeigt in analoger Weise die Verhältnisse für ein Netzwerk nach Figur 1a, bei dem die Anzahl n der Repeaterebenen RE um die n-te Repeaterebene REₙ - hier entfallen die Einrichtungen S₃₁, S₃₂ und R₂₁ und damit die dritte Repeaterebene RE₃- verringert wurde. Die Funktionalität des Netzwerkes ist auch ohne Anpassung der Anzahl der für die Übertragung verwendeten Zeitschlitze weiterhin gegeben, allerdings ist in diesem Fall die Ausnutzung der zur Verfügung stehenden Übertragungskapazität dahingehend nicht optimal, daß die bisher zur Laufzeitkompensation reservierten Zeiteinheiten - schraffiert dargestellt - ungenutzt bleiben. Deshalb werden erfindungsgemäß diese Zeiteinheiten wieder für Informationsübertragung verwendet. Der Abstand der Rahmenstartzeitpunkte to bleibt dabei konstant.

Das erfindungsgemäße Verfahren wird vorteilhaft in Energieversorgungsnetzen eingesetzt, über die Informationen - beispielsweise aus dem Internet - übertragen werden. Hierbei stellt die zentrale Kommunikationseinrichtung M eine zentrale Übertragungseinrichtung dar, die über die Repeater R mit den an die Energieversorgungsleitung angeschlossenen dezentralen Kommunikationseinrichtungen S kommuniziert. Das erfindungsgemäße Verfahren kann ebenfalls vorteilhaft für die Übertragung von Informationen in Breitbandkabelnetzen und Funknetzen eingesetzt werden.

## Patentansprüche

1. Verfahren zur Halbduplexübertragung von Informationen zwischen einer zentralen Kommunikationseinrichtung (M) und dezentralen Kommunikationseinrichtungen (S) über Repeatereinrichtungen (R), wobei die Einrichtungen (M,S,R) über ein Übertragungsmedium verbunden sind, bei dem ein Standardabstand zwischen den Einrichtungen (M,S,R) als die Übertragungsreichweite der Einrichtungen (M,S,R) definiert ist, und wobei
- die dezentralen Kommunikationseinrichtungen (S) der in Informationsübermittlungsrichtung zur zentralen Kommunikationseinrichtung (M) jeweils nächstgelegenen Repeatereinrichtung (R) zugeordnet sind,
- die dezentralen Kommunikationseinrichtungen (S) einer Repeaterebene (RE₀..RE₃) zugeordnet sind, wobei eine Repeaterebene (RE₀..RE₃) durch die Anzahl der zwischen der jeweiligen dezentralen und der zentralen Kommunikationseinrichtung (S,M) angeordneten Repeatereinrichtungen (R) bestimmt ist,
- jeder Repeaterebene (RE₀..RE₃) eine Verzögerungszeit (tᵥ) zugeordnet ist, die der sich aus dem Standardabstand ergebenden Laufzeit entspricht, **dadurch gekennzeichnet,**
- **daß** je Repeaterebene (RE₀..RE₃) die Übertragungsressourcen für die Übertragung der Informationen und die Kompensation der sich aus der Anzahl von Repeaterebenen (RE₀..RE₃) ergebenden Verzögerungszeiten (tᵥ) derart aufgeteilt werden, daß von der zentralen Kommunikationseinrichtung (M) die Informationen in konstanten Zeitabständen (t₀) übermittelt und empfangen werden können, indem:
- zur Übertragung der Daten eine Rahmenstruktur mit einer vorgegebenen, konstanten Rahmenlänge (t₀) vorgesehen ist,
- **daß** der Informationsübermittlungsrichtung von der zentralen Kommunikationseinrichtung (M) zu einer oder mehreren dezentralen Kommunikationseinrichtungen (S) ein erster Block (B₁) von Zeitschlitzen zugeordnet ist,
- **daß** der Informationsübermittlungsrichtung von einer oder mehreren dezentralen Kommunikationseinrichtungen (S) zur zentralen Kommunikationseinrichtung (M) ein zweiter Block (B₂) von Zeitschlitzen zugeordnet ist,
- **daß** eine erste Anzahl von Zeiteinheiten zwischen dem ersten und dem zweiten Block (B₁,B₂) sowie eine zweite Anzahl von Zeiteinheiten zwischen dem zweiten Block (B₂) und dem Rahmenende für die Kompensation der Signallaufzeiten vorgesehen ist, wobei eine Zeiteinheit durch jeweils zumindest einen Teil eines Zeitschlitzes repräsentiert ist.

2. Verfahren nach Anspruch 1,
**dadurch gekennzeichnet,**
**daß** in der zentralen Kommunikationseinrichtung (M) für die zugeordneten dezentralen Kommunikationseinrichtungen (S) einschließlich aller für die Übertragung eingesetzten Repeatereinrichtungen (R) spezifische Parameter in der zentralen Kommunikationseinrichtung (M) gespeichert sind und mit Hilfe des Übertragungsverfahrens an die dezentralen Kommunikationseinrichtungen (S) oder an die Repeatereinrichtungen (R) übermittelt und dort gespeichert werden.

3. Verfahren nach Anspruch 2,
**dadurch gekennzeichnet,**
**daß** die spezifischen Parameter
- die Verzögerungszeit je Repeaterebene (RE₀ .. RE₃),
- die Anzahl der Repeaterebenen (RE₀ .. RE₃₎,
- Informationen über eine Einrichtungs-spezifische Laufzeitkorrektur t_{LK,E} sowie über die Zugehörigkeit einer Einrichtung (M,S,R) zu einer der Repeaterebenen (RE₀..RE₃) umfassen.

4. Verfahren nach Anspruch 2 oder 3,
**dadurch gekennzeichnet,**
**daß** die spezifischen Parameter nach der Übertragung an die dezentralen Kommunikationseinrichtungen (S) oder an die Repeatereinrichtungen (R) in der zentralen Kommunikationseinrichtung (M) zumindest teilweise gelöscht werden.

5. Verfahren nach einem der Ansprüche 2 bis 4,
**dadurch gekennzeichnet,**
**daß** die spezifischen Parameter mit Hilfe eines von der zentralen Kommunikationseinrichtung (M) oder einem Repeater (R) gesteuerten Meßverfahrens in vorgegebenen Zeitabständen und/oder bei jeder Konfigurationsänderung gemessen werden.

6. Verfahren nach einem der Ansprüche 1 bis 5,
**dadurch gekennzeichnet,**
- **daß** die Summe der ersten und der zweiten Anzahl von Zeiteinheiten zur Kompensation der Signallaufzeiten für alle Einrichtungen (M,S,R) gleich ist,
- **daß** für die zentrale Kommunikationseinrichtung (M) die erste Anzahl von Zeiteinheiten zur Kompensation der Signallaufzeiten den größten für eine Einrichtung (M,S,R) auftretenden Wert annimmt und gleichzeitig die zweite Anzahl den kleinsten für eine Einrichtung (M,S,R) auftretenden Wert annimmt,
- **daß** ausgehend von der zentralen Kommunikationseinrichtung (M) von Repeaterebene (RE₀..RE₃) zu Repeaterebene (RE₀..RE₃) die erste Anzahl von Zeiteinheiten zur Kompensation der Signallaufzeiten abnimmt und die zweite Anzahl von Zeiteinheiten zur Kompensation der Signallaufzeiten zunimmt.

7. Verfahren nach einem der Ansprüche 1 bis 6,
**dadurch gekennzeichnet,**
**daß** die vorgegebene Rahmenlänge bei Rekonfigurationen und/oder Inbetriebnahme des Kommunikationsnetzes durch Konfiguration einstellbar ist.

8. Verfahren nach einem der Ansprüche 1 bis 7,
**dadurch gekennzeichnet,**
- **daß** das Übertragungsmedium eine Energieversorgungsleitung, ein Breitbandkabel oder eine Funkstrecke ist,
- **daß** die Einrichtungen gemeinsam mit oder integriert in Übertragungseinrichtungen zur Energieversorgung installiert oder Breitbandkabel-Übertragungseinrichtungen oder Funkübertragungseinrichtungen sind.

## Claims

1. Method for the half-duplex transmission of information between a central communication device (M) and decentralised communication devices (S) via repeater devices (R), the devices (M, S, R) being connected via a transmission medium, in which a standard spacing between the devices (M, S, R) is defined as the transmission range of the devices (M, S, R) and wherein
- the decentralised communication devices (S) are assigned to the next repeater device (R) in each instance in the direction of information transmission towards the central communication device (M),
- the decentralised communication devices (S) are assigned to a repeater level (RE₀, ... RE₃) , a repeater level (RE₀, ... RE₃) being defined by the number of repeater devices (R) arranged between the respective decentralised communication device and the central communication device (S, M),
- each repeater level (RE₀, ... RE₃) is assigned a delay time (tᵥ), which corresponds to the transit time resulting from the standard spacing,
**characterised in that**
- the transmission resources for the transmission of information and compensation for the delay times (tᵥ) resulting from the number of repeater levels (RE₀, ... RE₃) are allocated to each repeater level (RE₀, ... RE₃) such that the information can be transmitted and received by the central communication device (M) at constant time intervals (t₀), **in that**:
- a frame structure with a predefined, constant frame length (to) is provided for the transmission of data,
- a first block (B₁) of time slots is assigned to the direction of information transmission from the central communication device (M) to one or a plurality of decentralised communication devices (S).

2. Method according to Claim 1,
**characterized in that** specific parameters are stored in the central communication device (M) for the assigned decentralised communication devices (S), including all the repeater devices (R) used for transmission and are transmitted to the decentralised communication devices (S) or to the repeater devices (R) using the transmission method and stored there.

3. Method according to Claim 2,
**characterized in that** the specific parameters include
- the delay time for each repeater level (RE₀, ... RE₃),
- the number of repeater levels (RE₀, ... RE₃),
- information about a device-specific transit time correction t_{LK,E} and the association of a device (M, S, R) with one of the repeater levels (RE₀, ... RE₃).

4. Method according to Claim 2 or 3,
**characterized in that** the specific parameters are at least partially deleted in the central communication device (M) after transmission to the decentralised communication devices (S) or to the repeater devices (R).

5. Method according to one of Claims 2 to 4,
**characterized in that** the specific parameters are measured using a measuring method controlled by the central communication device (M) or a repeater (R) at predefined time intervals and/or at each configuration change.
- a second block (B₂) of time slots is assigned to the direction of information transmission from one or a plurality of decentralised communication devices (S) to the central communication device (M),
- a first number of time units is provided between the first and second blocks (B₁, B₂) and a second number of time units between a second block (B₂) and the end of the frame to compensate for signal transit times, a time unit being represented by at least part of a time slot in each instance.

6. Method according to one of Claims 1 to 5,
**characterized in that**
- the sum of the first and second number of time units to compensate for signal transit times is identical for all devices (M, S, R),
- for the central communication device (M) the first number of time units to compensate for signal transit times assumes the largest value occurring for a device (M, S, R) and at the same time the second number assumes the smallest value occurring for a device (M, S, R),
- the first number of time units to compensate for signal transit times decreases from repeater level (RE₀, ... RE₃) to repeater level (RE₀, ... RE₃) starting from the central communication device (M) and the second number of time units to compensate for signal transit times increases.

7. Method according to one of Claims 1 to 6,
**characterized in that** the predefined frame length can be adjusted by means of configuration on reconfiguration and/or commissioning of the communication network.

8. Method according to one of Claims 1 to 7,
**characterized in that**
- the transmission medium is a power supply line, a broadband cable or a radio link,
- the devices are installed together with or integrated in transmission devices for power supply purposes or are broadband cable transmission devices or radio transmission devices.

## Revendications

1. Procédé pour la transmission en semi-duplex d'informations entre un dispositif de communication central (M) et des dispositifs de communication décentralisés (S) par l'intermédiaire de dispositifs répéteurs (R), les dispositifs (M, S, R) étant raccordés par l'intermédiaire d'un milieu de transmission, dans lequel un écart standard entre les dispositifs (M, S, R) est défini comme la portée de transmission des dispositifs (M, S, R),
et les dispositifs de communication décentralisés (S) étant affectés au dispositif répéteur situé respectivement le plus près dans le sens de transmission d'informations par rapport au dispositif de communication central (M),
les dispositifs de communication décentralisés (S) étant affectés à un plan répéteur (RE₀ ... RE₃), un plan répéteur (RE₀ ... RE₃) étant déterminé par le nombre de dispositifs répéteurs (R) placés entre le dispositif de communication respectif, central et décentralisé (S, M),
un temps de retard (tᵥ) étant affecté à chaque plan répéteur (RE₀ ... RE₃), ce temps de retard correspondant au temps de propagation résultant de l'écart standard,
**caractérisé en ce que**
- pour chaque plan répéteur (RE₀ ... RE₃), les ressources de transmission pour la transmission des informations et pour la compensation des temps de retard (tᵥ) résultant du nombre de plans de répéteur (RE₀ ... RE₃) sont réparties de telle manière que les informations peuvent être transmises et reçues par intervalles de temps constants (t₀) par le dispositif de communication central (M), du fait que
- pour la transmission des données, une structure en trames ayant une longueur de trame (t₀) constante et prédéfinie est prévue,
- qu'un premier bloc (B₁) de créneaux temporels est affecté au dispositif de transmission d'informations, du dispositif de communication central (M) vers un ou plusieurs dispositifs de communication décentralisés (S).

2. Procédé selon la revendication 1,
**caractérisé en ce que**
dans le dispositif de communication central (M), des paramètres spécifiques pour les dispositifs de communication décentralisés affectés (S), y compris tous les dispositifs répéteurs (R) utilisés pour la transmission, sont mémorisés dans le dispositif de communication central (M) et sont transmis aux dispositifs de communication décentralisés (S) ou aux dispositifs répéteurs (R) à l'aide du procédé de transmission et y sont mémorisés.

3. Procédé selon la revendication 2,
**caractérisé en ce que**
les paramètres spécifiques comprennent
- le temps de retard par plan répéteur (RE₀ ... RE₃),
- le nombre de plans répéteurs (RE₀ ... RE₃),
- des informations sur une correction du temps de propagation t_{LK,E} spécifique au dispositif, ainsi que sur l'appartenance d'un dispositif (M, S, R) à l'un des plans répéteurs (RE₀.... RE₃).

4. Procédé selon la revendication 2 ou 3,
**caractérisé en ce que**
les paramètres spécifiques sont supprimés, au moins en partie, dans le dispositif de communication central (M) après la transmission aux dispositifs de communication décentralisés (S) ou aux dispositifs répéteurs (R).

5. Procédé selon l'une quelconque des revendications 2 à 4,
**caractérisé en ce que**
les paramètres spécifiques sont mesurés à l'aide d'un procédé de mesure commandé par le dispositif de communication central (M) ou par un répéteur (R), dans des intervalles de temps prédéfinis et/ou lors de chaque modification de configuration.

6. Procédé selon l'une quelconque des revendications 1 à 5,
**caractérisé**
- **en ce que** la somme du premier et du deuxième nombres d'unités de temps pour la compensation des retards de signal est la même pour tous les dispositifs (M, S, R),
- **en ce que**, pour le dispositif de communication central (M), le premier nombre d'unités de temps pour la compensation des retards de signal prend la plus grande valeur se produisant pour un dispositif (M, S, R) et qu'en même temps, le deuxième nombre prend la valeur la plus petite se produisant pour un dispositif (M, S, R),
- **en ce que**, partant du dispositif de communication central (M), le premier nombre d'unités de temps diminue pour la compensation des retards de signal, de plan répéteur (RE₀ ... RE₃) en plan répéteur (RE₀ ... RE₃), et en ce que le deuxième nombre d'unité de temps augmente pour la compensation des retards de signal.

7. Procédé selon l'une quelconque des revendications 1 à 6,
**caractérisé**
**en ce que** la longueur de trame prédéfinie est paramétrable par configuration lors de reconfigurations et/ou de la mise en service du réseau de communication.

8. Procédé selon l'une quelconque des revendications 1 à 7,
**caractérisé**
- **en ce que** le milieu de transmission est une ligne d'alimentation électrique, un câble à large bande ou un trajet radioélectrique,
- **en ce que** les dispositifs sont installés en commun ou en étant intégrés dans des dispositifs de transmission pour l'alimentation électrique ou en ce qu'ils sont des dispositifs de transmission à câble à large bande ou des dispositifs de transmission radioélectrique.
